(19) **Europäisches Patentamt / European Patent Office / Office européen des brevets**

(11) **EP 4 779 894 A1**

(12) **EUROPEAN PATENT APPLICATION**
published in accordance with Art. 153(4) EPC

(43) Date of publication:
**22.07.2026 Bulletin 2026/30**

(21) Application number: **24882802.2**

(22) Date of filing: **23.10.2024**

(51) International Patent Classification (IPC):
**H04B 7/06** (2006.01)   **H04L 25/02** (2006.01)
**H04W 84/12** (2009.01)

(52) Cooperative Patent Classification (CPC):
**H04B 7/06; H04L 25/02; H04W 84/12**

(86) International application number:
**PCT/KR2024/016140**

(87) International publication number:
**WO 2025/089775 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.10.2023 KR 20230143141**

(71) Applicant: **LG Electronics Inc.**
**Yeongdeungpo-gu**
**Seoul 07336 (KR)**

(72) Inventors:
• **JUNG, Insik**
  **Seoul 06772 (KR)**
• **CHOI, Jinsoo**
  **Seoul 06772 (KR)**
• **PARK, Eunsung**
  **Seoul 06772 (KR)**
• **CHUN, Jinyoung**
  **Seoul 06772 (KR)**
• **LIM, Dongguk**
  **Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND APPARATUS FOR GENERATING OPTIMIZED V MATRIX ON BASIS OF RESULTS OF SOUNDING IN WIRELESS LAN SYSTEM**

(57) Proposed are a method and an apparatus for beamforming by using an optimized V matrix on the basis of results of sounding in a wireless LAN system. Specifically, a reception STA receives an NDPA frame from a transmission STA. The reception STA receives an NDP frame from the transmission STA. The reception STA transmits a feedback frame to the transmission STA. The reception STA receives beamformed data from the transmission STA on the basis of a V matrix optimized for smooth beamforming. The optimized V matrix is calculated by multiplying the fed-back V matrix by a diagonal matrix.

FIG. 28

transmitting, by a transmitting station (STA), a Null Data Packet Announcement (NDPA) frame to a receiving STA — S2810

transmitting, by the transmitting STA, an NDP frame to the receiving STA — S2820

receiving, by the transmitting STA, a feedback frame from the receiving STA — S2830

transmitting, by the transmitting STA, beamformed data to the receiving STA based on a V matrix optimized for smooth beamforming — S2840

EP 4 779 894 A1

## Description

### TECHNICAL FIELD

The present specification relates to a scheme for generating an optimized V matrix based on sounding results in a wireless local area network (WLAN) system. More specifically, it relates to a method and apparatus in which a beamformer calculates an optimized V matrix only for some feedback tones where discontinuities occur among all feedback tones.

### BACKGROUND ART

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.11be standard.

In a new WLAN standard, an increased number of spatial streams may be used. In this case, in order to properly use the increased number of spatial streams, a signaling technique in the WLAN system may need to be improved.

### DISCLOSURE

### TECHNICAL PROBLEM

The present specification proposes a method and apparatus in which a beamformer generates an optimized V matrix based on sounding results in a wireless LAN system.

### TECHNICAL SOLUTION

An example of the present specification proposes a method in which a beamformer generates an optimized V matrix based on sounding results.

The present embodiment may be performed in a network environment supported by a next-generation WLAN system (Ultra High Reliability (UHR) WLAN system or next Wi-Fi). The next-generation WLAN system is an improved WLAN system of an 802.11be system and may satisfy backward compatibility with the 802.11be system.

The present embodiment is performed in a receiving STA, and the receiving STA may correspond to at least one station (STA) or beamformee. A transmitting STA may correspond to an access point (AP) or beamformer.

The present embodiment proposes a method in which the beamformer performs optimization only for some feedback tones where discontinuity occurs based on feedback results.

A receiving station (STA) receives a Null Data Packet Announcement (NDPA) frame from a transmitting STA.

The receiving STA receives an NDP frame from the transmitting STA.

The receiving STA transmits a feedback frame to the transmitting STA.

The receiving STA receives beamformed data based on a V matrix optimized for smooth beamforming from the transmitting STA.

The optimized V matrix is calculated by multiplying a feedback-received V matrix by a diagonal matrix. The feedback-received V matrix is included in the feedback frame. The diagonal matrix is generated based on a result optimized for some feedback tones where discontinuity occurs among all feedback tones.

Specifically, for the some feedback tones where discontinuity occurs, the diagonal matrix may be generated based on the optimized result for the some feedback tones where discontinuity occurs. In addition, for feedback tones located between adjacent tones where discontinuity occurs, the diagonal matrix may be generated based on an optimized result for a feedback tone having a lower tone index among the adjacent tones.

For example, for the feedback tone where discontinuity occurs, an optimized V matrix may be acquired by directly multiplying the diagonal matrix for the corresponding feedback tone. However, for the feedback tones located between adjacent tones where discontinuity occurs, they are considered to be substantially continuous tones, and thus an optimized V matrix may be acquired by multiplying a diagonal matrix for a feedback tone with a lower tone index among the adjacent tones.

That is, the present embodiment proposes a method in which a beamformer multiplies a feedback-received V matrix by a diagonal matrix generated based on an optimized result for smooth beamforming.

ADVANTAGEOUS EFFECTS

In the past, a beamformer applied optimization to all feedback tones for a feedback-received V matrix. However, the present embodiment proposes a method in which the beamformer computationally calculates and optimizes only for some feedback tones where discontinuity occurs. This has an effect of having no overhead from the perspective of a beamformee and being able to reduce the amount of computation by 93% without significant Frame Error Rate (FER) degradation compared to the conventional method.

**BRIEF DESCRIPTION OF THE DRAWINGS**

FIG. 1 shows an example of a transmitting apparatus and/or receiving apparatus of the present specification.

FIG. 2 is a conceptual view illustrating the structure of a wireless local area network (WLAN).

FIG. 3 illustrates a general link setup process.

FIG. 4 shows an example of a multi-link (ML).

FIG. 5 shows an example of a physical protocol data unit or physical layer (PHY) protocol data unit (PPDU) transmitted/received by an STA of the present disclosure.

FIG. 6 is a diagram illustrating the layout of resource units (RUs) used for a 20 MHz PPDU.

FIG. 7 is a diagram illustrating the layout of resource units (RUs) used for 40MHz PPDU.

FIG. 8 is a diagram illustrating the layout of resource units (RUs) used for an 80MHz PPDU.

FIG. 9 shows an operation related to UL-MU.

FIG. 10 illustrates an example of channels used/supported/defined within the 2.4 GHz band.

FIG. 11 illustrates an example of channels used/supported/defined within the 5 GHz band.

FIG. 12 illustrates an example of channels used/supported/defined within the 6 GHz band.

FIG. 13 shows an example of a header of a MAC frame.

FIG. 14 illustrates an example of a modified transmission device and/or receiving device of the present specification.

FIG. 15 shows an example of EHT non-TB sounding.

FIG. 16 shows an example of EHT TB sounding.

FIG. 17 shows an example of an EHT NDP Announcement frame format.

FIG. 18 illustrates an example of a sounding feedback and beamforming protocol of the present specification.

FIG. 19 illustrates an example of Euclidean distance between adjacent tones proposed in the present embodiment.

FIG. 20 illustrates an example of an equation for obtaining a diagonal phase rotation matrix $D\_i$ proposed in the present specification.

FIG. 21 is a graph comparing the performance between an optimization feedback scheme through a Part of tone FB field and a conventional feedback scheme.

FIG. 22 illustrates an example of a PPDU of the present specification.

FIG. 23 illustrates a procedure in which a transmitting apparatus performs a sounding protocol for optimization of a V matrix according to the present embodiment.

FIG. 24 illustrates a procedure in which a receiving apparatus performs a sounding protocol for optimization of a V matrix according to the present embodiment.

FIG. 25 illustrates an overall procedure of a sounding protocol for optimization of a V matrix according to the present embodiment.

FIG. 26 is a procedural flowchart illustrating an operation of a transmitting apparatus according to the present embodiment.

FIG. 27 is a procedural flowchart illustrating an operation of a receiving apparatus according to the present embodiment.

FIG. 28 is a flowchart illustrating a procedure in which a transmitting STA generates a V matrix optimized by a beamformer based on sounding results according to the present embodiment.

FIG. 29 is a flowchart illustrating a procedure in which a receiving STA receives beamformed data based on an optimized V matrix based on sounding results according to the present embodiment.

## MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

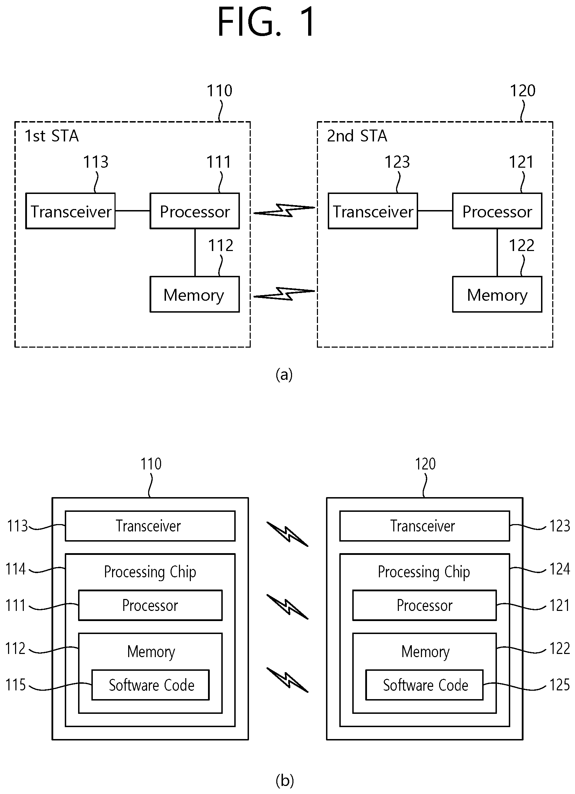

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm®, EXYNOSTM series of processors made by Samsung®, A series of processors made by Apple®, HELIOTM series of processors made by MediaTek®, ATOMTM series of processors made by Intel® or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

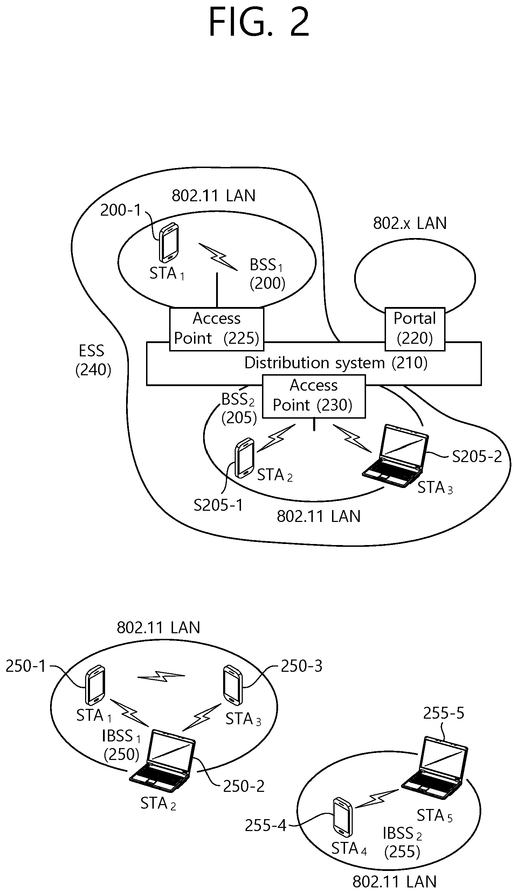

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

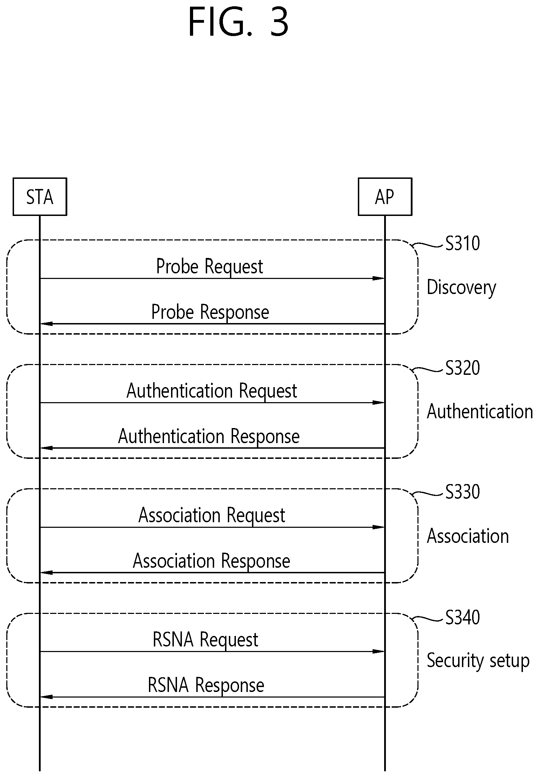

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

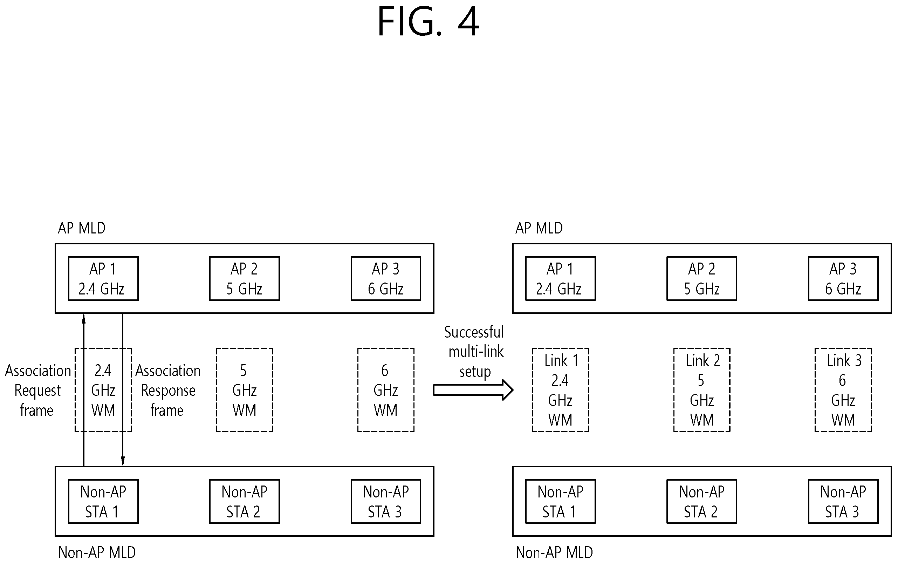

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

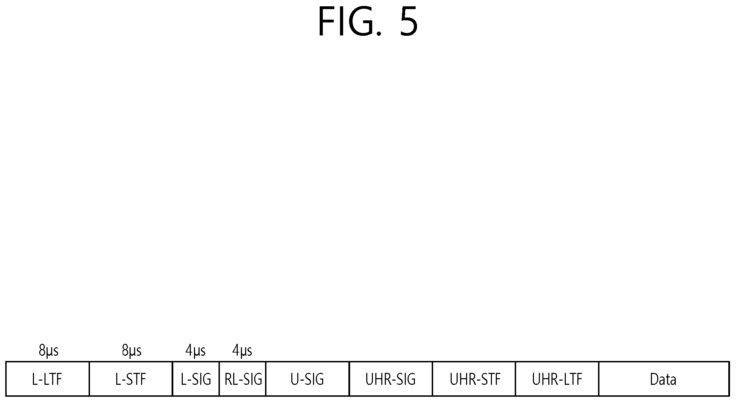

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N$^{th}$ type PPDU, etc. The PPDU described in the present disclosure can be used in a WLAN system defined according to IEEE 802.11bn and/or a next-generation WLAN system that improves IEEE 802.11bn.

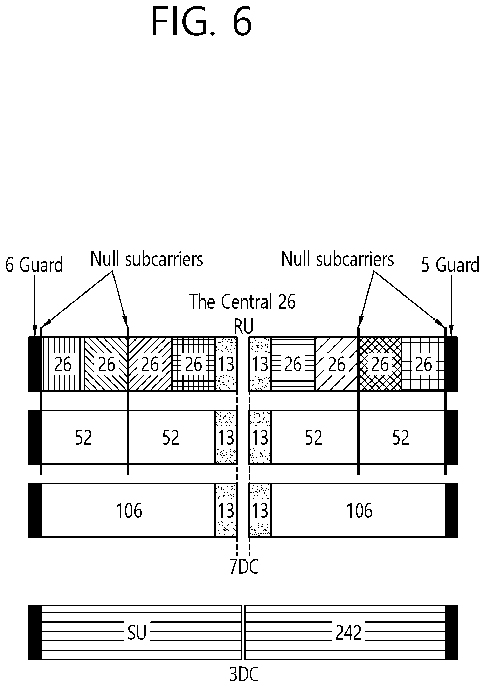

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

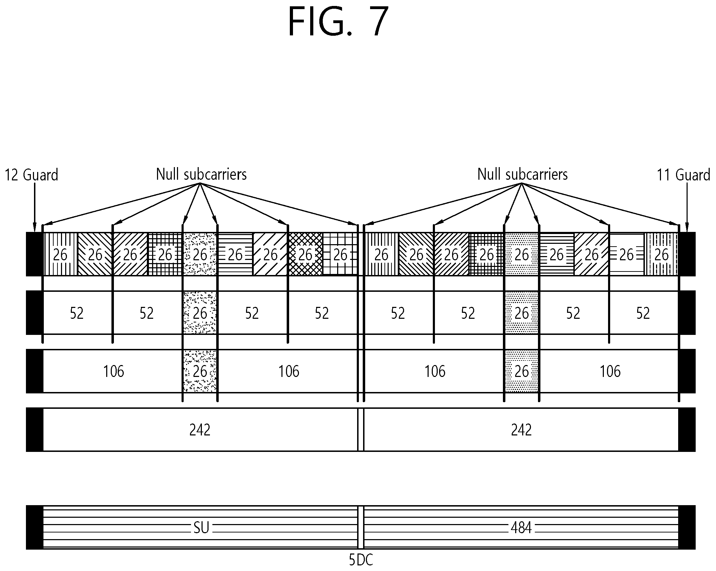

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

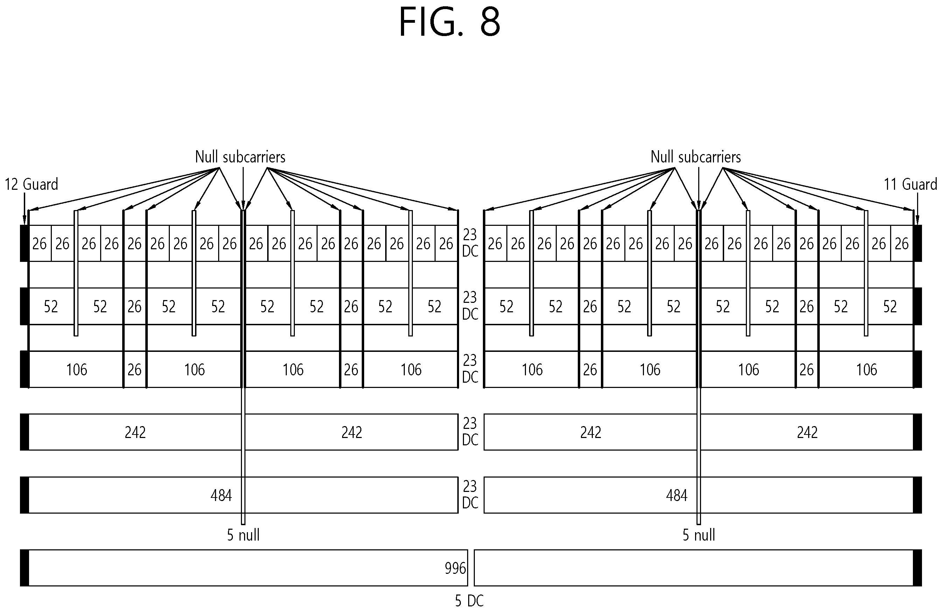

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

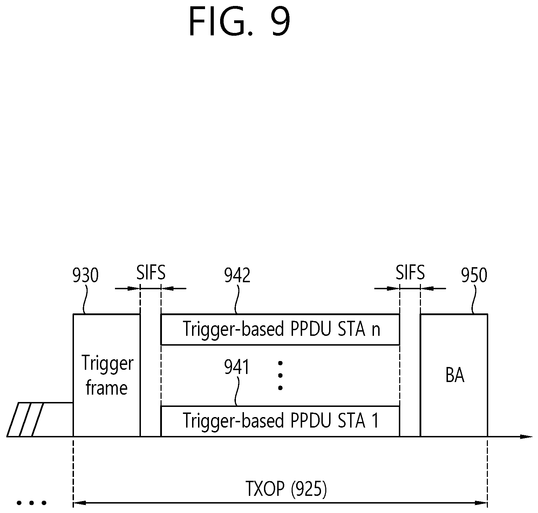

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

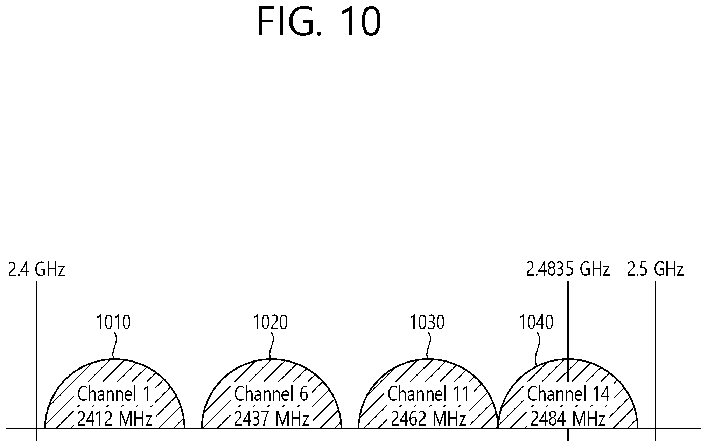

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

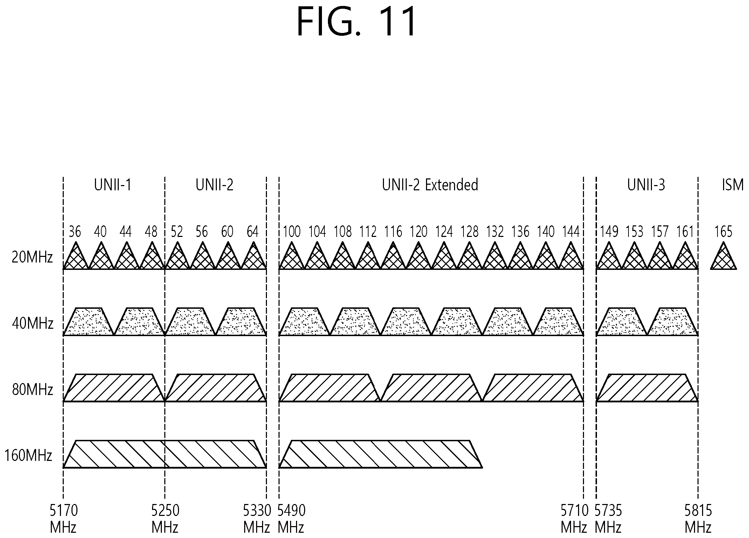

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

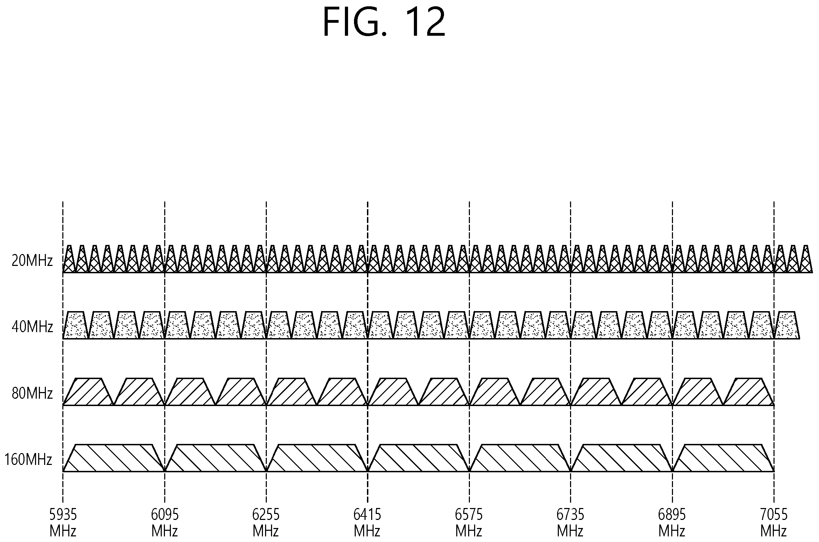

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

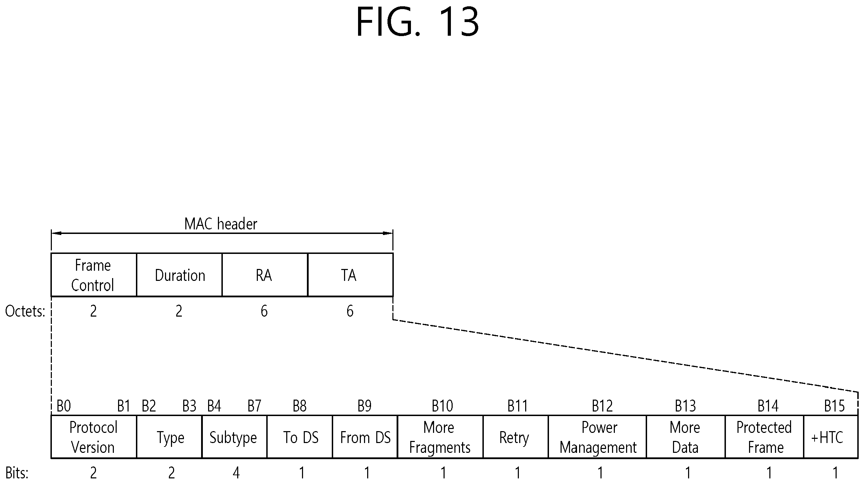

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response

(0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

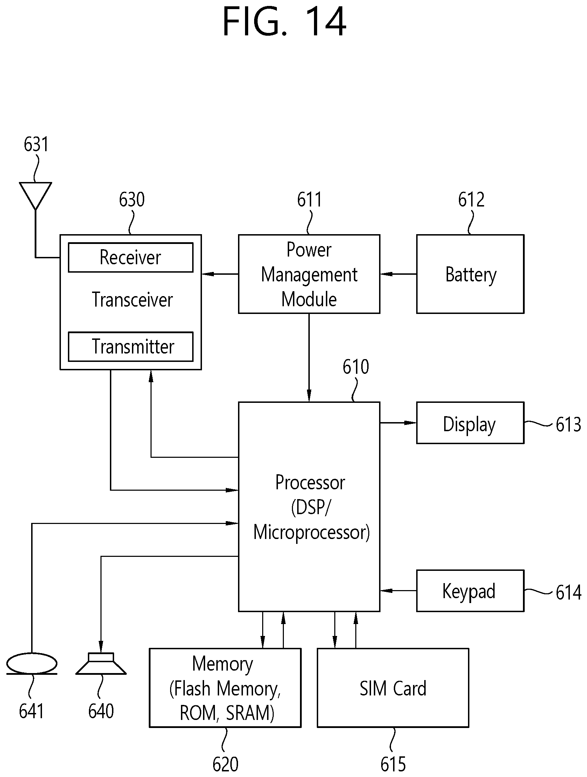

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

1. EHT sounding protocol

Transmit beamforming and DL MU-MIMO (DownLink Multi User-Multi Input Multi Output) require knowledge of channel conditions to calculate a steering matrix applied to the transmit signal to optimize reception at one or more receivers. The EHT STA determines channel state information using the EHT sounding protocol. The EHT sounding protocol provides explicit feedback mechanisms defined as EHT non-trigger-based (non-TB) sounding and EHT trigger-based (TB) sounding. Here, the EHT beamformee measures the channel using the training signal transmitted by the EHT beamformer (i.e., the EHT sounding NDP) and sends back a transformed estimate of the channel state. The EHT beamformer uses this estimate to derive a steering matrix.

The EHT beamformer returns an estimate of a channel state in an EHT compressed beamforming/CQI report included in one or more EHT Compressed Beamforming/CQI frames. There are three types of EHT compression beamforming/CQI report.

- SU feedback: EHT compression beamforming / CQI report consists of an EHT compression beamforming report field.
- MU feedback: EHT compression beamforming / CQI report consists of an EHT compression beamforming report field and an EHT MU Exclusive beamforming report field.
- CQI feedback: EHT compression beamforming / CQI report consists of an EHT CQI report field.

For reference, the use of EHT TB sounding does not necessarily mean MU feedback. EHT TB sounding is also used to obtain SU feedback and CQI feedback.

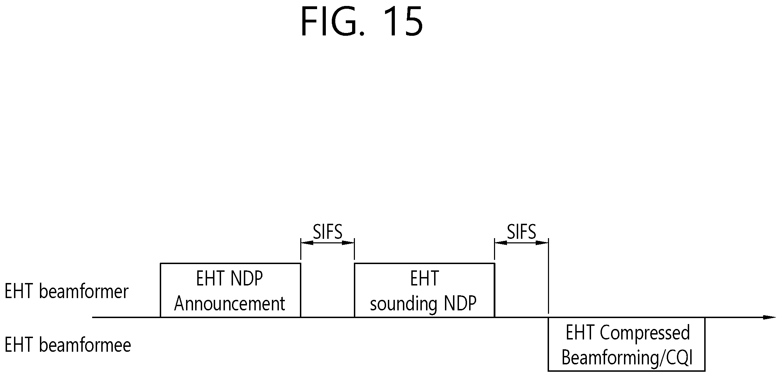

FIG. 15 shows an example of EHT non-TB sounding.

The EHT non-TB sounding sequence is initiated by the EHT beamformer using an individually addressed EHT NDP Announcement frame containing exactly one STA information field, and EHT sounding NDP is performed after SIFS. The EHT beamformer responds with an EHT Compressed Beamforming/CQI frame after SIFS.

The AID11 subfield of the STA information field must be set to the AID of the STA identified by the RA field of the EHT NDP Announcement frame, or set to 0 if the STA identified by the RA field is a mesh STA, AP, or IBSS STA.

An example of an EHT non-TB sounding sequence with a single EHT beamform is shown in FIG. 15.

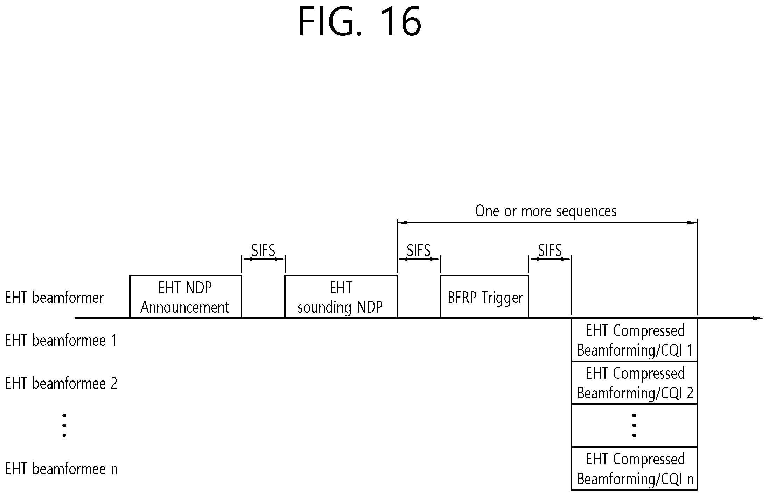

FIG. 16 shows an example of EHT TB sounding.

The EHT TB sounding sequence is initiated by the EHT beamformer using a broadcast EHT NDP Announcement frame with two or more STA information fields, an EHT sounding NDP is transmitted after the SIFS, and a BFRP (Beamforming Report) trigger frame following the SIFS is transmitted. The BFRP trigger frame transmitted within the EHT TB sounding sequence must request the EHT TB PPDU.

An example of an EHT TB sounding sequence with two or more EHT beamformes is shown in FIG. 16.

An EHT beamformer initiating an EHT TB sounding sequence must transmit an EHT NDP Announcement frame including two or more STA information fields and an RA field set to a broadcast address.

The EHT beamformer may initiate an EHT TB sounding sequence to request SU, MU or CQI feedback.

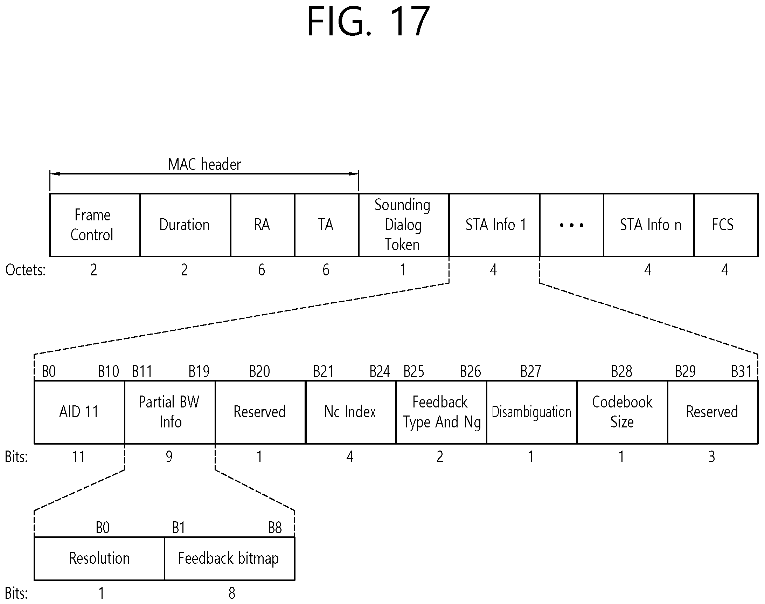

FIG. 17 shows an example of an EHT NDP Announcement frame format.

The VHT/HE/EHT NDP Announcement frame has three variants: the VHT NDP Announcement frame, the HE NDP Announcement frame, and the EHT NDP Announcement frame. Each variant is distinguished by the configuration of the HE subfield and the Ranging subfield within the Sounding Dialog Token field.

The VHT/HE/EHT NDP Announcement frame includes at least one STA Info field. If the VHT/HE/EHT NDP Announcement frame includes only one STA Info field, the RA field is set to the address of an STA capable of providing feedback. If the VHT/HE/EHT NDP Announcement frame includes one or more STA Info fields, the RA field is set to a broadcast address.

The TA field is set to the address of the STA transmitting the VHT/HE/EHT NDP Announcement frame or the bandwidth signaling TA of the STA transmitting the VHT/HE/EHT NDP Announcement frame.

The Resolution subfield of the Partial BW Info subfield indicates the resolution bandwidth for each bit of the Feedback Bitmap subfield. The Feedback Bitmap subfield represents the request for each resolution bandwidth from the lowest frequency to the highest frequency, and B1 represents the lowest resolution bandwidth. Each bit in the Feedback Bitmap subfield is set to 1 when feedback is requested in the corresponding resolution bandwidth.

The Partial BW Info subfield is defined in the format at the bottom of FIG. 17. The Resolution bit indicates the feedback resolution bandwidth. The Resolution bit is set to 0 to indicate a resolution of 20 MHz when the BW subfield is set to 0 to 3, and is set to 1 to indicate a resolution of 40 MHz when the BW subfield is set to 4. The Feedback Bitmap subfield indicates each resolution bandwidth for which the beamformer requests feedback. Each bit in the Feedback Bitmap subfield is set to 1 if feedback is requested for the corresponding bandwidth, and 0 otherwise.

If the bandwidth of the EHT NDP Announcement frame is less than 320 MHz, set the Resolution bit B0 to 0 to indicate a resolution of 20 MHz.

- When the bandwidth of the EHT NDP Announcement frame is 20 MHz, B1 is set to 1 to indicate a feedback request for a 242-tone RU. B2-B8 are reserved and set to 0.
- When the bandwidth of the EHT NDP Announcement frame is 40MHz, B1 and B2 indicate feedback requests for each of the two 242-tone RUs from low to high frequencies. B3-B8 are reserved and set to 0.
- When the bandwidth of the EHT NDP Announcement frame is 80 MHz, B1 to B4 represent feedback requests for each of the four 242-tone RUs from low to high frequencies. B5 to B8 are reserved and set to 0. If B1 to B4 are all set to 1, it indicates a feedback request for a 996-tone RU.
- When the bandwidth of the EHT NDP Announcement frame is 160 MHz, B1-B8 represent feedback requests for each of the eight 242-tone RUs from low to high frequencies. If B1 to B4 are all set to 1, it indicates a feedback request for the lower 996 tone RU, and if B5 to B8 are all set to 1, it indicates a feedback request to the upper 996 tone RU.

When the bandwidth of the EHT NDP Announcement frame is 320 MHz, the resolution bit B0 is set to 1 to indicate a resolution of 40 MHz. B1 to B8 represent feedback requests for each of the eight 484-tone RUs from low to high frequencies. When both B1 and B2 are set to 1, it indicates a feedback request for the lowest 996-tone RU, when both B3 and B4 are set to 1, it indicates a feedback request for the second lowest 996-tone RU, when both B5 and B6 are set to 1, it indicates a feedback request for the second highest 996-tone RU, and when both B7 and B8 are set to 1, it indicates a feedback request for the highest 996-tone RU.

Beamforming technology, which improves performance by setting transmission beam vectors, is used to enhance the performance of wireless LAN systems. Channel smoothing is a technology known to improve reception performance by reducing the impact of noise on channel estimation and increasing estimation accuracy.

Interestingly, the combined use of beamforming and channel smoothing techniques has been shown to degrade the performance of wireless LAN systems. This is because discontinuities in beamformed Long Training Field (LTF) symbols can occur, distorting the original signal during smoothing. This problem does not occur if beamforming is not performed on LTF symbols. However, in this case, the beamformee must precisely know the beam steering matrix to utilize receivers such as Linear Minimum Mean Squared Error (LMMSE), and the LTF symbols cannot benefit from beamforming.

A method for solving the above discontinuity problem is optimizing a beam steering matrix. In fact, research results have been published showing that channel smoothing gain may be obtained by optimizing and multiplying a beam steering matrix by a diagonal matrix to solve the discontinuity.

In the present specification, a method for obtaining a diagonal matrix to be multiplied by a beam steering matrix with much lower complexity than a conventional smooth beamforming scheme is proposed. While conventional schemes must perform optimization for all tones, the proposed scheme may significantly reduce optimization complexity through a scheme that selectively optimizes only for tones where significant discontinuity occurs.

In the present specification, a beamformer is not limited to an AP and may be applied even when a non-AP STA is a beamformer. In addition, in the present specification, a beamformee is not limited to a non-AP STA and may be applied even when an AP is a beamformee. For example, while examples of the present specification mainly describe being applied to downlink beamforming for downlink transmission from an AP to a non-AP STA for better understanding, the scope of the present specification includes applying the examples described below to uplink beamforming for uplink transmission from a non-AP STA to an AP.

**1. Method for Optimizing the V Matrix**

1) System Model

The present specification assumes a beamformer having $N_t$ antennas and a beamformee having $N_r$ antennas. In this case, the wireless channel between the two is H, where H is an $N_r$ by $N_t$ matrix. Additionally, the number of spatial streams of the corresponding channel is defined as $N\_SS$.

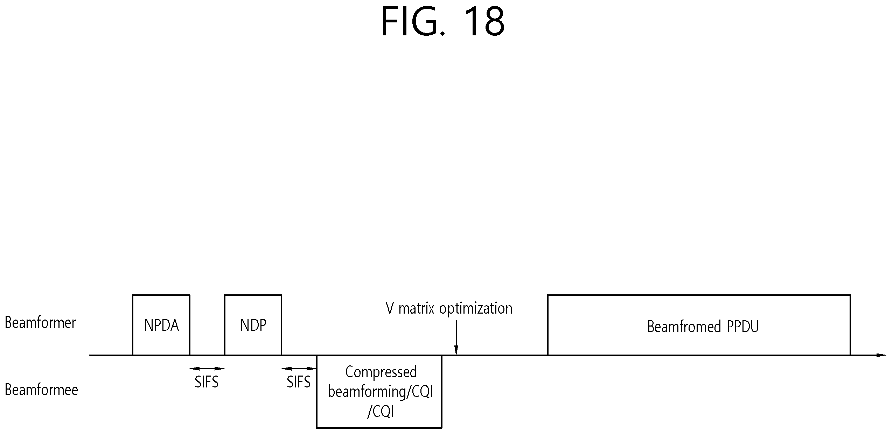

FIG. 18 illustrates an example of a sounding feedback and beamforming protocol of the present specification.

The frame exchange sequence considered in the present specification is as shown in FIG. 18. Within this sequence, the present specification newly proposes a method for optimizing the V matrix.

2) Proposed Beamforming Method

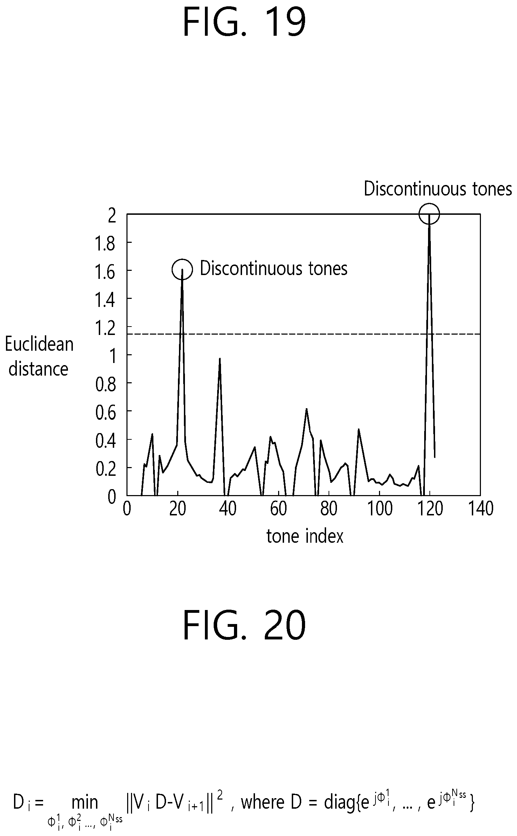

FIG. 19 illustrates an example of Euclidean distance between adjacent tones proposed in the present embodiment.

The beamformer starts a channel sounding sequence by transmitting an NDPA and an NDP. The beamformee estimates an $H_i$ matrix, which is a channel of the i-th tone, and calculates a $V_i$ matrix through singular value decomposition ($H_i = U_i \Lambda V_i^H$). Next, the estimated $V_i$ matrix is delivered as a Compressed beamforming/CQI frame. Based on the received $V_i$ matrix, the beamformer measures the Euclidean distance (other metrics such as cross-correlation may also be utilized) between adjacent tones as shown in FIG. 19, and filters out tones exceeding a predefined threshold value. At this time, a tone set exceeding the threshold is defined as follows: $T = \{t\_1, t\_2, ..., t\_N\}$ (elements are sorted in ascending order).

FIG. 20 illustrates an example of an equation for obtaining a diagonal phase rotation matrix $D_i$ proposed in the present specification.

The beamformer obtains a diagonal phase rotation matrix $D_i$, which can most effectively reduce discontinuity for the filtered tones, through the optimization problem shown in the equation of FIG. 20.

Referring to FIG. 20, the reason for multiplying by a diagonal matrix is that since the columns of the V matrix are orthonormal vectors, multiplying by a constant with a magnitude of 1 has no impact on performance and merely serves to remove discontinuities.

Next, when the beamformer transmits data, the beam steering matrix is set as shown in a) and b) below:

a) If $i \in$,

$$-> V\_i * D\_i$$

b) If $j < i < t\_(j+1)$,

$$-> V\_i * D\_(t\_j)$$

According to feature a), the beamformer may calculate by directly multiplying $D\_i$ for a tone where discontinuity occurs. According to feature b), the beamformer considers tones located between adjacent tones where discontinuity occurs to be substantially continuous, and thus may calculate by multiplying $D\_(t\_j)$ for a tone with a lower tone index among the adjacent tones.

3) Performance of the Proposed Scheme

In this section, the performance of the proposed scheme is presented. Specifically, it presents the degree of FER performance degradation when applying the proposed method compared to a method of optimizing all tones, and analyzes and presents the complexity reduction effect of the proposed scheme.
i) Comparison groups are as follows:

- Without optimization, without smoothing: Performance where neither optimization nor smoothing is performed.
- Without optimization, with smoothing: Performance where only smoothing is applied without optimization.
- Full tone optimization: Performance where all tones are optimized.

ii) The following conditions were applied to the proposed scheme:

With part of tone (POT) optimization, with smoothing, Threshold = 0.4799
Definition of Threshold:
-> When a channel matrix is defined as H=UΛV^H and a diagonal matrix that makes the last row of the V matrix a real value is defined as D, a Frobenius norm value of the Euclidean matrix of VD between adjacent tones is defined as d. At this time, if d > Threshold, it is determined that discontinuity has occurred.
Setting method of threshold value
-> An appropriate threshold value will be determined based on numerous physical variables. Accordingly, an appropriate value may vary depending on an environment in which the proposed scheme is applied. Therefore, if there is no specific criterion for setting the threshold value, FER performance will have to be observed to find an appropriate threshold value for every environment in a brute-force manner.
-> Determining the threshold is deciding what level of Euclidean distance is considered as a discontinuity to be optimized. While it would be most ideal to provide an appropriate value and its corresponding physical basis, solving such a problem is very difficult.
-> Accordingly, in the present specification, a scheme capable of setting a statistically reasonable threshold value was devised and applied.
-> The present specification assumed that a discontinuity value is most significantly influenced by a channel model and an antenna configuration, and other factors were excluded. Therefore, the present specification intended to determine what threshold value is desirable to set when a specific antenna configuration is applied in a specific channel model. First, after collecting sufficient data of Euclidean distance values and drawing a cumulative density function (CDF), a scheme of setting a discontinuity value as large as the top 2% as the threshold was adopted. As a result of confirmation, it was confirmed that when the threshold is set by the scheme used in the present specification, there is almost no FER performance degradation compared to a full tone optimization scheme.

iii) Simulation Environment

[Table 1]

| Parameters | Values |
|---|---|
| Antenna Configuration | 2 by 2 |
| MCS | 7 |
| Channel Model | TGnD, NLOS |
| Receiver | LMMSE |
| Channel Estimation | Least Square |
| Quantization | (phi, psi) = (6,4) bits |
| Bandwidth | 40MHz |

iv) FER performance

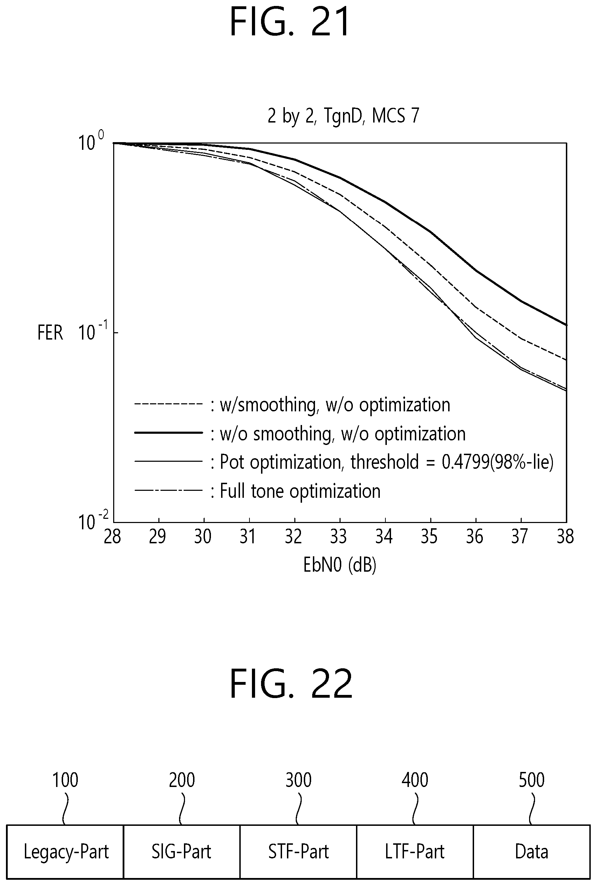

FIG. 21 is a graph comparing the performance between an optimization feedback scheme through a Part of tone FB field and a conventional feedback scheme.

Referring to FIG. 21, it can be confirmed that the proposed part of tone optimization exhibits almost no degradation in FER performance compared to full tone optimization.

v) Complexity Performance
A. The amount of computation required to solve a single optimization problem (the mathematical formula in FIG. 20) is as follows. Below, Q is the number of quantization levels of phi.

[Table 2]

| Complex multiplication | Complex addition | Comparison |
|---|---|---|
| (N_t+1) * N SS^2 * Q^(N_SS) | (N_t+1) * N SS^2 * Q^(N_SS) | Q^(N_SS)-1 |

B. Assuming the total number of subcarriers is N_total and the average number of discontinuous tones is N_dis, the complexity of the existing method and the proposed method is as follows.

[Table 3]

| Method | Complex multi. | Complex addition | Comparsion |
|---|---|---|---|
| Full tone optimization | N_total * (N_t+1) * N_SS^2 * Q^(N_SS) | N_total * (N_t+1) * N_SS^2 * Q^(N_SS) | N_total * (Q^(N_SS)-1) |
| Proposal Optimization | N_dis * (N_t+1) * N_SS^2 * Q^(N_SS) | N_dis * (N_t+1) * N_SS^2 * Q^(N_SS ) | N_dis * (Q^(N_SS)-1) |
| Computational amount ratio | N_dis/N_total | N_dis/N_total | N_dis/N_total |

C. Experimental observations show that at an SNR of 36 dB, the average value of N_dis is 8.57 and N_total is 122; therefore, the proposed method can reduce the amount of computation by 93%. The degree of reduction in computation may vary depending on the experimental environment (SNR, threshold value, etc.). Overall, the proposed method can reduce the amount of computation by 93.0% with almost no degradation in FER performance.

**2. Device/Method in which an example of this specification operates**

2.1. Method of transmitting/receiving a signal of this specification

FIG. 22 illustrates an example of a PPDU of the present specification.
FIG. 22 illustrates an example of a PPDU that may be used in a UHR system, and all or some of all illustrated parts (for example, fields) may be divided into a plurality of sub-parts/sub-fields. Fields other than LTF and Data fields may be transmitted in units of 4us * N (N is an integer). In the case of LTF and data fields, they may not be in units of 4us based on a GI length combination. A common subcarrier frequency spacing value (delta_f=312.5 kHz / N or 312.5 kHz * N, N=integer) is applied to all of the illustrated fields, or a first delta_f is applied to a first part (e.g., all of Legacy-Part, all/part of SIG-Part), and a second delta_f (e.g., a value smaller than the first delta_f) may be applied to all/part of the remaining parts.
The illustrated Legacy Part (100) may include at least one of a conventional Non-HT Short Training Field (L-STF), Non-HT Long Training Field (L-LTF) and Non-HT Signal Field (L-SIG).
The illustrated SIG-Part (200) may include various control information for the transmitted PPDU. For example, it may include control information for decoding an STF-Part (300), LTF-Part (400) and Data (500).
The illustrated STF-Part (300) may include an STF sequence.
The illustrated LTF-Part (400) may include a training field (for example, an LTF sequence) for channel estimation.
The data field (500) includes user data and may include a packet for a higher layer. For example, it may include an MPDU (MAC Frame).
Beamforming may be applied to an LTF symbol of an NDP.
In addition, since FIG. 22 is illustrated by prediction, some of the illustrated fields may be omitted, and the order of fields may be changed in various ways.

2.2. Method of the present disclosure

1) Transmission Method

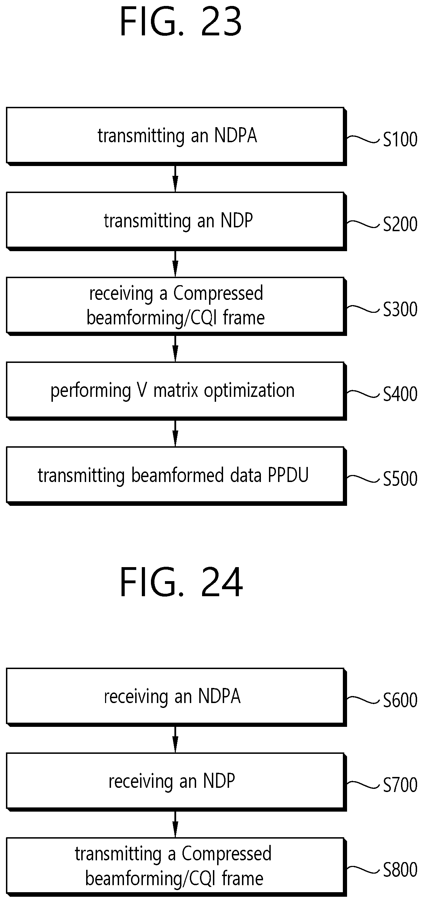

FIG. 23 illustrates a procedure in which a transmitting apparatus performs a sounding protocol for optimization of a V matrix according to the present embodiment.
An example of FIG. 23 may be performed in a transmitting apparatus (AP and/or non-AP STA).
Some of each step (or detailed sub-steps to be described later) of the example of FIG. 23 may be omitted or changed.

S100: A transmitting apparatus (transmitting STA or beamformer) may generate an MPDU including an NDPA frame including one or more of whether to optimize and/or a quantization level.

The transmitting apparatus may configure/generate a PPDU based on the generated MPDU. The step of configuring/generating the PPDU includes a step of configuring/generating each field of the PPDU. For example, step S300 includes a step of configuring U-SIG and UHR SIG fields. In addition, step S300 may include a step of generating an STF/LTF sequence. The STF/LTF sequence may be generated based on a preset STF generation sequence/LTF generation sequence.

The transmitting apparatus may transmit the configured PPDU to a receiving apparatus.

In PPDU transmission, the transmitting apparatus may perform at least one of operations such as beamforming, CSD, Spatial Mapping, IDFT/IFFT operation and GI insertion.

For example, beamforming may be performed based on a V matrix and an optimized beam vector value received most recently from the receiving apparatus (or beamformee).

A signal/field/sequence configured according to the present specification may be transmitted in the form of FIG. 22.

S200: After NDPA transmission, the transmitting apparatus may transmit one or more NDPs to the receiving apparatus after a predetermined time (e.g., SIFS).

S300: The transmitting apparatus may receive a compressed beamforming/CQI frame from the receiving apparatus.

For example, the transmitting apparatus may receive all or part of the PPDU. The received signal may be in the form of FIG. 22. For example, the transmitting apparatus may perform an operation of restoring results of CSD, Spatial Mapping, IDFT/IFFT operation and GI insertion operation applied to the received PPDU.

For example, the transmitting apparatus decodes L-SIG, U-SIG and UHR-SIG of the PPDU based on Legacy STF/LTF and may acquire information included in the L-SIG, U-SIG and UHR-SIG fields. Based on corresponding information, the transmitting apparatus may decode the rest of the PPDU.

For example, the transmitting apparatus may perform a processing operation of delivering decoded data to a higher layer (e.g., MAC layer). In addition, when generation of a signal from the higher layer to a PHY layer is instructed in response to the data delivered to the higher layer, a subsequent operation may be performed.

For example, the transmitting apparatus may decode/parse the acquired MPDU.

For example, the transmitting apparatus may acquire an MPDU including compressed beamforming/CQI by decoding the PPDU from the receiving apparatus. Through decoding/parsing of the MPDU, corresponding information may be acquired through a field included in the compressed beamforming/CQI frame.

The compressed beamforming/CQI frame may be transmitted by the receiving apparatus by a request/trigger from the transmitting apparatus. Alternatively, it may be transmitted by the receiving apparatus even without a request/trigger from a compressed beamforming/CQI transmitting apparatus (e.g., non-TB sounding).

S400: The transmitting apparatus may perform optimization of the present disclosure based on the compressed beamforming/CQI. For example, a diagonal phase rotation matrix to be multiplied by a beamforming matrix may be obtained.

S500: Based on information acquired from a field included in the compressed beamforming/CQI frame, the transmitting apparatus may apply an optimized parameter for subsequent beamforming transmission to the corresponding receiving apparatus. For example, the transmitting apparatus receives the compressed beamforming/CQI frame, generates a beamforming vector to be utilized for next PPDU transmission, and may store it in a memory.

2) Receiving method

FIG. 24 illustrates a procedure in which a receiving apparatus performs a sounding protocol for optimization of a V matrix according to the present embodiment.

The above-described PPDU may be received according to the example of FIG. 24.

An example of FIG. 24 may be performed in a receiving apparatus (AP and/or non-AP STA).

Some of each step (or detailed sub-steps to be described later) of the example of FIG. 24 may be omitted.

S600: For example, the receiving apparatus may receive all or part of the PPDU. The received signal may be in the form of FIG. 22. For example, the receiving apparatus may perform an operation of restoring results of CSD, Spatial Mapping, IDFT/IFFT operation and GI insertion operation applied to the received PPDU.

For example, the receiving apparatus decodes L-SIG, U-SIG and UHR-SIG of the PPDU based on Legacy STF/LTF and may acquire information included in the L-SIG, U-SIG and UHR-SIG fields. Based on corresponding information, the receiving apparatus may decode the rest of the PPDU.

For example, the receiving apparatus may perform a processing operation of delivering decoded data to a higher layer (e.g., MAC layer). In addition, when generation of a signal from the higher layer to a PHY layer is instructed in response to the data delivered to the higher layer, a subsequent operation may be performed.

For example, the receiving apparatus may decode/parse the acquired MPDU.

A receiving apparatus (receiving STA or beamformee) according to the present disclosure may acquire information on AID11, partial BW Info, etc. included in an NDPA frame through PPDU decoding or the like.

S700: After receiving the NDPA frame, the receiving apparatus may perform channel estimation after subsequently receiving one or more NDPs.

S800: The receiving apparatus may generate an MPDU including a compressed beamforming/CQI frame based on a channel estimation result.

The receiving apparatus may configure/generate a PPDU based on the generated MPDU. The step of configuring/generating the PPDU may include a step of configuring/generating each field of the PPDU. For example, PPDU configuration/generation may include a step of configuring U-SIG and UHR SIG fields, a step of generating an STF/LTF sequence, and the like. The STF/LTF sequence may be generated based on a preset STF generation sequence/LTF generation sequence.

The receiving apparatus may transmit the configured PPDU to the transmitting apparatus.

In PPDU transmission, the receiving apparatus may perform at least one of operations such as beamforming, CSD, Spatial Mapping, IDFT/IFFT operation and GI insertion.

A signal/field/sequence configured according to the present specification may be transmitted in the form of FIG. 22.

The compressed beamforming/CQI frame may be transmitted by the receiving apparatus by a request/trigger from the transmitting apparatus. Alternatively, it may be transmitted by the receiving apparatus even without a request/trigger from a compressed beamforming/CQI transmitting apparatus.

The receiving apparatus may expect that subsequent beamforming transmission from the transmitting apparatus will be performed based on information indicated by a field included in the compressed beamforming/CQI frame.

2.3. Apparatus of the present specification

1) Transmitting apparatus

The transmitting apparatus may include a memory (1920), a processor (1910) and a transceiver (1930).

The processor (1910) may perform all/some of the operations illustrated in FIG. 23.

The illustrated transceiver (1930) includes an antenna and may perform analog signal processing. Specifically, the processor (1910) may control the transceiver (1930) to transmit the PPDU generated by the processor (1910).

Alternatively, the processor (1910) may generate a transmission PPDU and store information on the transmission PPDU in the memory (1920).

The processor (1910) may generate a first PPDU including an NDPA and transmit it through the transceiver (1930).

In addition, the processor (1910) may transmit an NDP through the transceiver (1930).

In addition, the processor (1910) may acquire control information from a PPDU including a UHR compressed beamforming/CQI frame to optimize a V matrix, and then store the optimized beamforming matrix in the memory (1920). In addition, it may transmit through the transceiver (1930) using the optimized beamforming matrix stored in the memory (1920).

2) Receiving apparatus

The receiving apparatus may include a memory (2020), a processor (2010) and a transceiver (2030).

The transceiver (2030) may receive a PPDU based on control of the processor (2010). For example, the transceiver (2030) may include a plurality of detailed units. For example, the transceiver (2030) includes at least one receiving antenna and may include a filter for the corresponding receiving antenna.

The PPDU received through the transceiver (2030) may be stored in the memory (2020). The processor (2010) may process decoding for the received PPDU through the memory (2020). The processor (2010) may acquire control information on a Tone-Plan/RU (e.g., EHT-SIG) included in the PPDU and store the acquired control information in the memory (2020).

The processor (2010) may perform decoding for the received PPDU. Specifically, it may perform an operation of restoring results of CSD, Spatial Mapping, IDFT/IFFT operation and GI insertion applied to the PPDU. The operation of restoring results of CSD, Spatial Mapping, IDFT/IFFT operation and GI insertion may be performed through a plurality of processing units (not illustrated) individually implemented within the processor (2010).

In addition, the processor (2010) may decode a data field of the PPDU received through the transceiver (2030).

In addition, the processor (2010) may process decoded data. For example, the processor (2010) may perform a processing operation of delivering information on a decoded data field to a higher layer (e.g., MAC layer). In addition, when generation of a signal from the higher layer to a PHY layer is instructed in response to the data delivered to the higher layer, a subsequent operation may be performed.

The processor (2010) may receive and decode a PPDU including an NDPA through the transceiver (2030) and store it in the memory (2020).

The receiving apparatus may receive an NDP, acquire channel information and store it in the memory (2020).

The processor (2010) may generate a UHR compressed beamforming/CQI frame by performing singular value decomposition on a channel estimated through the NDP, and transmit a PPDU including it through the transceiver (2030).

2.4. Operational Examples of the Present Specification

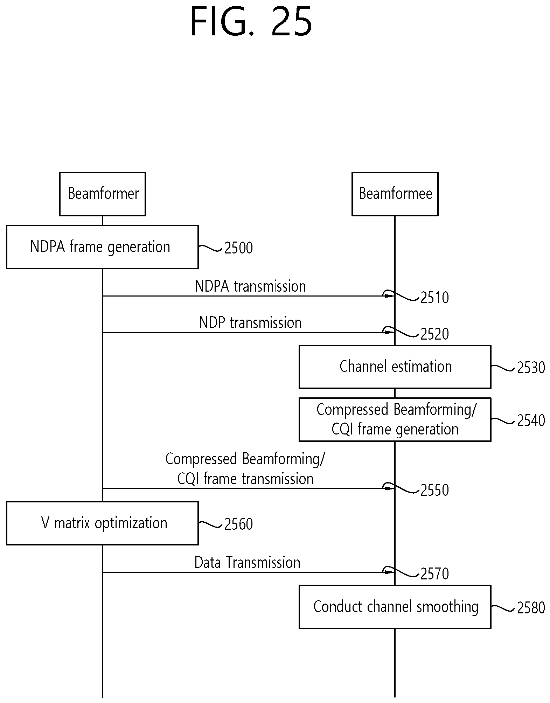

FIG. 25 illustrates an overall procedure of a sounding protocol for optimization of a V matrix according to the present embodiment.

NDPA frame generation (2500) refers to a process of generating an NDPA frame. Field value settings may vary based on situations described below (instructed by a beamformer or autonomously by a beamformee).

NDPA transmission (2510) refers to a process of delivering the NDPA frame generated in (2500) through a first PPDU.

NDP transmission (2520) refers to transmitting a Null data PPDU so that the beamformee may estimate a channel.

Channel estimation (2530) refers to a process in which the beamformee estimates a channel matrix from the received NDP.

Compressed Beamforming/CQI frame generation (2540) refers to generating a compressed beamforming/CQI frame based on a V matrix obtained by performing singular value decomposition on the estimated channel matrix.

Compressed Beamforming/CQI frame transmission (2550) refers to transmitting the Compressed Beamforming/CQI frame generated in (2540) through a PPDU.

V matrix optimization (2560) refers to obtaining an optimal diagonal phase rotation matrix for the purpose of reducing Euclidean distance between adjacent tones of the V matrix delivered through (2550). At this time, optimization may be performed only in some tones as proposed in the present disclosure.

Data Transmission (2570) may be performed with beamforming including the optimization result performed in (2560).

Conduct channel smoothing (2580) refers to the beamformee applying smoothing to the estimated channel for the purpose of reducing noise impact and the like. Through the corresponding process, reception PER may be improved.

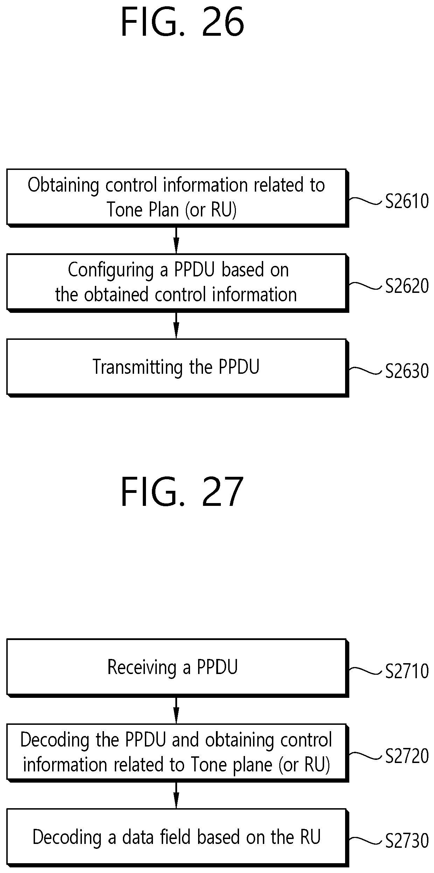

FIG. 26 is a procedural flowchart illustrating an operation of a transmitting apparatus according to the present embodiment.

The example of FIG. 26 may be performed by a transmitting device (AP and/or non-AP STA).

Some of each step (or detailed sub-step to be described later) of the example of FIG. 26 may be skipped/omitted.

Through step S2610, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2620, the transmitting device may construct/generate a PPDU based on the acquired control information. Configuring/generating the PPDU may include configuring/generating each field of the PPDU. That is, step S2620 includes configuring the EHT-SIG field including control information about the tone plan. That is, step S2620 includes configuring a field including control information (e.g., N bitmap) indicating the size/position of the RU; and/or configuring a field including an identifier of an STA receiving the RU (e.g., AID).

Also, step S2620 may include generating an STF/LTF sequence transmitted through a specific RU. The STF/LTF sequence may be generated based on a preset STF generation sequence/LTF generation sequence.

Also, step S2620 may include generating a data field (i.e., MPDU) transmitted through a specific RU.

The transmitting device may transmit the PPDU constructed through step S2620 to the receiving device based on step S2630.

While performing step S2630, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 27 is a procedural flowchart illustrating an operation of a receiving apparatus according to the present embodiment.

The aforementioned PPDU may be received according to the example of FIG. 27.

The example of FIG. 27 may be performed by a receiving apparatus/device (AP and/or non-AP STA).

Some of each step (or detailed sub-step to be described later) of the example of FIG. 27 may be skipped/omitted.

The receiving device (receiving STA) may receive all or part of the PPDU through step S2710. The received signal may be in the form of FIG. 5.

A sub-step of step S2710 may be determined based on step S2630 of FIG. 26. That is, in step S2710, an operation of restoring the result of the CSD, Spatial Mapping, IDFT/IFFT operation, and GI insertion operation applied in step S2630 may be performed.

In step S2720, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2730, the receiving device may decode the remaining part of the PPDU based on information about the tone plan (i.e., RU) acquired through step S2720. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2730 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 27.

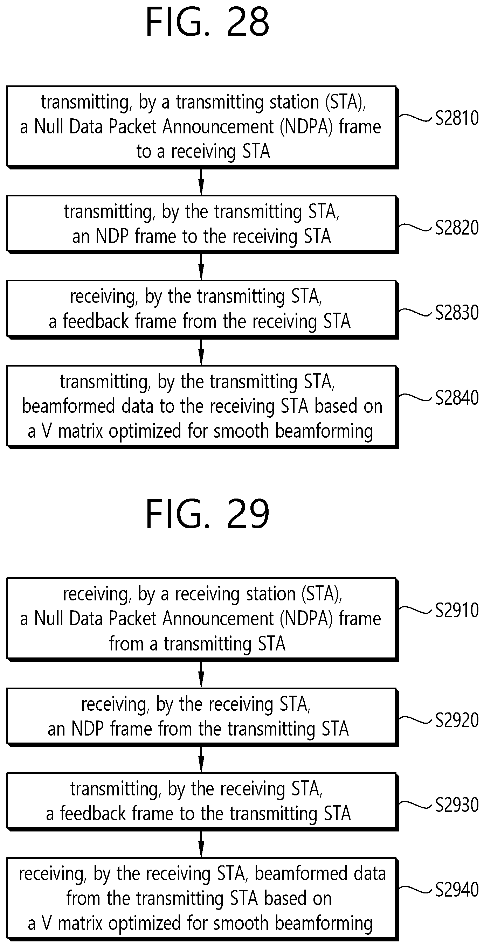

FIG. 28 is a flowchart illustrating a procedure in which a transmitting STA generates a V matrix optimized by a beamformer based on sounding results according to the present embodiment.

The example of FIG. 28 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 28 is performed at a transmitting STA, which may correspond to a beamformer or an access point (AP). The receiving STA of FIG. 28 may correspond to a beamformee or at least one STA (station).

The present embodiment proposes a method in which the beamformer performs optimization only for some feedback tones where discontinuity occurs based on feedback results.

In step S2810, a transmitting station (STA) transmits a Null Data Packet Announcement (NDPA) frame to a receiving STA.

In step S2820, the transmitting STA transmits an NDP frame to the receiving STA.

In step S2830, the transmitting STA receives a feedback frame from the receiving STA.

In step S2840, the transmitting STA transmits beamformed data to the receiving STA based on a V matrix optimized for smooth beamforming.

The optimized V matrix is calculated by multiplying a feedback-received V matrix by a diagonal matrix for some feedback tones where discontinuity occurs among all feedback tones. The feedback-received V matrix is included in the feedback frame. The diagonal matrix is generated based on a result optimized for some feedback tones where discontinuity occurs among all feedback tones.

Specifically, for the some feedback tones where discontinuity occurs, the optimized V diagonal matrix may be generated based on an optimized result calculated by multiplying the diagonal matrix for the some feedback tones where discontinuity occurs. In addition, for feedback tones located between adjacent tones where discontinuity occurs, the optimized V diagonal matrix may be generated based on an optimized result calculated by multiplying a diagonal matrix for a feedback tone having a lower tone index among the adjacent tones.

For example, for the feedback tone where discontinuity occurs, an optimized V matrix may be acquired by directly multiplying the diagonal matrix for the corresponding feedback tone. However, for the feedback tones located between adjacent tones where discontinuity occurs, they are considered to be substantially continuous tones, and thus an optimized V matrix may be acquired by multiplying a diagonal matrix for a feedback tone with a lower tone index among the adjacent tones.

That is, the present embodiment proposes a method in which, for smooth beamforming, the beamformer calculates an optimized V matrix by multiplying a diagonal matrix for some feedback tones where discontinuity occurs among all feedback tones, by multiplying the feedback-received V matrix by a diagonal matrix generated based on an optimized result. In the past, a beamformer applied optimization to all feedback tones for a feedback-received V matrix. However, the present embodiment proposes a method in which the beamformer computationally calculates and optimizes only for some feedback tones where discontinuity occurs. This has an effect of having no overhead from the perspective of a beamformee and being able to reduce the amount of computation by 93% without significant Frame Error Rate (FER) degradation compared to the conventional method.

The diagonal matrix may be acquired based on minimizing a metric related to Euclidean distance capable of quantifying the degree of the discontinuity or a metric related to cross-correlation. The diagonal matrix may be acquired by an equation such as FIG. 20.

At this time, the some feedback tones where the discontinuity occurs may be configured with tones where an Euclidean distance between the adjacent tones exceeds a threshold value.

The feedback frame may be configured based on the NDPA frame and the NDP frame.

In addition, the receiving STA performs channel smoothing on a channel estimated based on the beamformed data. A beamforming vector acquired based on the optimized V matrix may be applied to the beamformed data.

When the receiving STA is one STA, a non-TB (Trigger Based) sounding scheme is used as in steps S2810 to S2830. However, when the receiving STA is a plurality of STAs (for example, in the case of MU feedback), a TB sounding scheme triggering the feedback frame by using a Beamforming Report Poll (BFRP) trigger frame between step S2820 and step S2830 may be used. Specifically, after transmitting the NDP frame, the transmitting STA may transmit the BFRP trigger frame and receive a feedback frame triggered by the BFRP trigger frame. The BFRP trigger frame includes at least one user information field, and only a receiving STA identified by the user information field may transmit the feedback frame.

The NDP frame and the feedback frame may be transmitted in the same band as the NDPA frame. The NDP frame may be defined as a modification of a UHR Multi-User (MU) PPDU.

FIG. 29 is a flowchart illustrating a procedure in which a receiving STA receives beamformed data based on an optimized V matrix based on sounding results according to the present embodiment.

The example of FIG. 29 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 29 is performed at a receiving STA, which may correspond to a beamformee or at least one STA (station). The transmitting STA of FIG. 29 may correspond to a beamformer or an AP (access point).

The present embodiment proposes a method in which the beamformer performs optimization only for some feedback tones where discontinuity occurs based on feedback results.

In step S2910, a receiving station (STA) receives a Null Data Packet Announcement (NDPA) frame from a transmitting STA.

In step S2920, the receiving STA receives an NDP frame from the transmitting STA.

In step S2930, the receiving STA transmits a feedback frame to the transmitting STA.

In step S2940, the receiving STA receives beamformed data from the transmitting STA based on a V matrix optimized for smooth beamforming.

The optimized V matrix is calculated by multiplying a feedback-received V matrix by a diagonal matrix. The feedback-received V matrix is included in the feedback frame. The diagonal matrix is generated based on a result optimized for some feedback tones where discontinuity occurs among all feedback tones.

Specifically, for the some feedback tones where discontinuity occurs, the diagonal matrix may be generated based on the optimized result for the some feedback tones where discontinuity occurs. In addition, for feedback tones located between adjacent tones where discontinuity occurs, the diagonal matrix may be generated based on an optimized result for a feedback tone having a lower tone index among the adjacent tones.

For example, for the feedback tone where discontinuity occurs, an optimized V matrix may be acquired by directly multiplying the diagonal matrix for the corresponding feedback tone. However, for the feedback tones located between adjacent tones where discontinuity occurs, they are considered to be substantially continuous tones, and thus an optimized V matrix may be acquired by multiplying a diagonal matrix for a feedback tone with a lower tone index among the adjacent tones.

That is, the present embodiment proposes a method in which, for smooth beamforming, the beamformer multiplies the feedback-received V matrix by a diagonal matrix generated based on an optimized result. In the past, a beamformer applied optimization to all feedback tones for a feedback-received V matrix. However, the present embodiment proposes a method in which the beamformer computationally calculates and optimizes only for some feedback tones where discontinuity occurs. This has an effect of having no overhead from the perspective of a beamformee and being able to reduce the amount of computation by 93% without significant Frame Error Rate (FER) degradation compared to the conventional method.

The diagonal matrix may be acquired based on minimizing a metric related to Euclidean distance capable of quantifying the degree of the discontinuity or a metric related to cross-correlation. The diagonal matrix may be acquired by an equation such as FIG. 20.

At this time, the some feedback tones where the discontinuity occurs may be configured with tones where an Euclidean distance between the adjacent tones exceeds a threshold value.

The feedback frame may be configured based on the NDPA frame and the NDP frame.

In addition, the receiving STA performs channel smoothing on a channel estimated based on the beamformed data. A beamforming vector acquired based on the optimized V matrix may be applied to the beamformed data.

When the receiving STA is one STA, a non-TB (Trigger Based) sounding scheme is used as in steps S2910 to S2930. However, when the receiving STA is a plurality of STAs (for example, in the case of MU feedback), a TB sounding scheme triggering the feedback frame by using a Beamforming Report Poll (BFRP) trigger frame between step S2920 and step S2930 may be used. Specifically, after transmitting the NDP frame, the transmitting STA may transmit the BFRP trigger frame and receive a feedback frame triggered by the BFRP trigger frame. The BFRP trigger frame includes at least one user information field, and only a receiving STA identified by the user information field may transmit the feedback frame.

The NDP frame and the feedback frame may be transmitted in the same band as the NDPA frame. The NDP frame may be defined as a modification of a UHR Multi-User (MU) PPDU.

**< Device configuration>**

The technical features of the present disclosure may be applied to various devices and methods. For example, the technical features of the present disclosure may be performed/supported through the device(s) of FIG. 1 and/or FIG. 14. For example, the technical features of the present disclosure may be applied to only part of FIG. 1 and/or FIG. 14. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 14. For example, the device according to the present disclosure receives a Null Data Packet Announcement (NDPA) frame from a transmitting station (STA); receives an NDP frame from the transmitting STA; transmits a feedback frame to the transmitting STA; and receives beamformed data from the transmitting STA based on a V matrix optimized for smooth beamforming.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a Null Data Packet Announcement (NDPA) frame from a transmitting station (STA); receiving an NDP frame from the transmitting STA; transmitting a feedback frame to the transmitting STA; and receiving beamformed data from the transmitting STA based on a V matrix optimized for smooth beamforming. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 14. Meanwhile, the CRM of the present disclosure may be the memory 112, 122 of FIG. 1, the memory 620 of FIG. 14, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

**Claims**

1. A method in a wireless local area network (WLAN) system, the method comprising:

   receiving, by a receiving station (STA), a Null Data Packet Announcement (NDPA) frame from a transmitting STA;
   receiving, by the receiving STA, an NDP frame from the transmitting STA;
   transmitting, by the receiving STA, a feedback frame to the transmitting STA; and
   receiving, by the receiving STA, beamformed data from the transmitting STA based on a V matrix optimized for smooth beamforming,
   wherein the optimized V matrix is calculated by multiplying a feedback-received V matrix by a diagonal matrix,
   wherein the feedback-received V matrix is included in the feedback frame, and
   wherein the diagonal matrix is generated based on a result optimized for some feedback tones where discontinuity occurs among all feedback tones.

2. The method of claim 1, wherein, for the some feedback tones where the discontinuity occurs, the diagonal matrix is generated based on the optimized result for the some feedback tones where the discontinuity occurs.

3. The method of claim 1, wherein, for feedback tones located between adjacent tones where the discontinuity occurs, the diagonal matrix is generated based on a result optimized for a feedback tone having a lower tone index among the adjacent tones.

4. The method of claim 3, wherein the diagonal matrix is acquired based on minimizing a metric related to Euclidean distance capable of quantifying the degree of the discontinuity or a metric related to cross-correlation, and
   wherein the some feedback tones where the discontinuity occurs are configured with tones where an Euclidean distance between the adjacent tones exceeds a threshold value.

**5.** The method of claim 1, wherein the feedback frame is configured based on the NDPA frame and the NDP frame.

**6.** The method of claim 1, further comprising:

performing, by the receiving STA, channel smoothing on a channel estimated based on the beamformed data, wherein a beamforming vector acquired based on the optimized V matrix is applied to the beamformed data.

**7.** A receiving station (STA) in a wireless local area network (WLAN) system, the receiving STA comprising:

a memory;
a transceiver; and
a processor being operatively connected to the memory and the transceiver,
wherein the processor is configured to:

receive a Null Data Packet Announcement (NDPA) frame from a transmitting STA;
receive an NDP frame from the transmitting STA;
transmit a feedback frame to the transmitting STA; and
receive beamformed data from the transmitting STA based on a V matrix optimized for smooth beamforming,
wherein the optimized V matrix is calculated by multiplying a feedback-received V matrix by a diagonal matrix,
wherein the feedback-received V matrix is included in the feedback frame, and
wherein the diagonal matrix is generated based on a result optimized for some feedback tones where discontinuity occurs among all feedback tones.

**8.** A method in a wireless local area network (WLAN) system, the method comprising:

transmitting, by a transmitting station (STA), a Null Data Packet Announcement (NDPA) frame to a receiving STA;
transmitting, by the transmitting STA, an NDP frame to the receiving STA;
receiving, by the transmitting STA, a feedback frame from the receiving STA; and
transmitting, by the transmitting STA, beamformed data to the receiving STA based on a V matrix optimized for smooth beamforming,
wherein the optimized V matrix is calculated by multiplying a feedback-received V matrix by a diagonal matrix,
wherein the feedback-received V matrix is included in the feedback frame, and
wherein the diagonal matrix is generated based on a result optimized for some feedback tones where discontinuity occurs among all feedback tones.

**9.** The method of claim 8, wherein, for the some feedback tones where the discontinuity occurs, the diagonal matrix is generated based on the optimized result for the some feedback tones where the discontinuity occurs.

**10.** The method of claim 8, wherein, for feedback tones located between adjacent tones where the discontinuity occurs, the diagonal matrix is generated based on a result optimized for a feedback tone having a lower tone index among the adjacent tones.

**11.** The method of claim 10, wherein the diagonal matrix is acquired based on minimizing a metric related to Euclidean distance capable of quantifying the degree of the discontinuity or a metric related to cross-correlation, and wherein the some feedback tones where the discontinuity occurs are configured with tones where an Euclidean distance between the adjacent tones exceeds a threshold value.

**12.** The method of claim 8, wherein the feedback frame is configured based on the NDPA frame and the NDP frame.

**13.** The method of claim 8, wherein channel smoothing is performed on a channel estimated based on the beamformed data, and wherein a beamforming vector acquired based on the optimized V matrix is applied to the beamformed data.

**14.** A transmitting station (STA) in a wireless local area network (WLAN) system, the transmitting STA comprising:

a memory;
a transceiver; and

a processor being operatively connected to the memory and the transceiver,
wherein the processor is configured to:

transmit a Null Data Packet Announcement (NDPA) frame to a receiving STA;
transmit an NDP frame to the receiving STA;
receive a feedback frame from the receiving STA; and
transmit beamformed data to the receiving STA based on a V matrix optimized for smooth beamforming,
wherein the optimized V matrix is calculated by multiplying a feedback-received V matrix by a diagonal matrix,
wherein the feedback-received V matrix is included in the feedback frame, and
wherein the diagonal matrix is generated based on a result optimized for some feedback tones where discontinuity occurs among all feedback tones.

15. A computer readable medium including an instruction being executed by at least one processor and performing a method comprising the steps of:

receiving a Null Data Packet Announcement (NDPA) frame from a transmitting station (STA);
receiving an NDP frame from the transmitting STA;
transmitting a feedback frame to the transmitting STA; and
receiving beamformed data from the transmitting STA based on a V matrix optimized for smooth beamforming,
wherein the optimized V matrix is calculated by multiplying a feedback-received V matrix by a diagonal matrix,
wherein the feedback-received V matrix is included in the feedback frame, and
wherein the diagonal matrix is generated based on a result optimized for some feedback tones where discontinuity occurs among all feedback tones.

16. A device in a wireless local area network (WLAN) system, the device comprising:

a memory; and
a processor being operatively connected to the memory,
wherein the processor is configured to:

receive a Null Data Packet Announcement (NDPA) frame from a transmitting station (STA);
receive an NDP frame from the transmitting STA;
transmit a feedback frame to the transmitting STA; and
receive beamformed data from the transmitting STA based on a V matrix optimized for smooth beamforming,
wherein the optimized V matrix is calculated by multiplying a feedback-received V matrix by a diagonal matrix,
wherein the feedback-received V matrix is included in the feedback frame, and
wherein the diagonal matrix is generated based on a result optimized for some feedback tones where discontinuity occurs among all feedback tones.

# FIG. 1

110

120

1st STA

113 Transceiver

111 Processor

112 Memory

2nd STA

123 Transceiver

121 Processor

122 Memory

(a)

110

120

113 Transceiver

114 Processing Chip

111 Processor

112 Memory

115 Software Code

Transceiver 123

Processing Chip 124

Processor 121

Memory 122

Software Code 125

(b)

# FIG. 2

# FIG. 3

# FIG. 4

AP MLD

| AP 1 2.4 GHz | AP 2 5 GHz | AP 3 6 GHz |

Association Request frame

| 2.4 GHz WM | 5 GHz WM | 6 GHz WM |

Association Response frame

| Non-AP STA 1 | Non-AP STA 2 | Non-AP STA 3 |

Non-AP MLD

Successful multi-link setup

AP MLD

| AP 1 2.4 GHz | AP 2 5 GHz | AP 3 6 GHz |

| Link 1 2.4 GHz WM | Link 2 5 GHz WM | Link 3 6 GHz WM |

| Non-AP STA 1 | Non-AP STA 2 | Non-AP STA 3 |

Non-AP MLD

# FIG. 5

| L-LTF | L-STF | L-SIG | RL-SIG | U-SIG | UHR-SIG | UHR-STF | UHR-LTF | Data |
|-------|-------|-------|--------|-------|---------|---------|---------|------|
| 8μs | 8μs | 4μs | 4μs | | | | | |

# FIG. 6

6 Guard    Null subcarriers        Null subcarriers    5 Guard

The Central 26
RU

| 26 | 26 | 26 | 26 | 13 | 13 | 26 | 26 | 26 | 26 |

| 52 | 52 | 13 | 13 | 52 | 52 |

| 106 | 13 | 13 | 106 |

7DC

| SU | 242 |

3DC

# FIG. 7

EP 4 779 894 A1

12 Guard      Null subcarriers      Null subcarriers      11 Guard

| 26 | 26 | 26 | 26 | 26 | 26 | 26 | 26 | 26 | 26 | 26 | 26 | 26 | 26 | 26 | 26 | 26 | 26 |

| 52 | 52 | 26 | 52 | 52 | 52 | 52 | 26 | 52 | 52 |

| 106 | 26 | 106 | 106 | 26 | 106 |

| 242 | 242 |

| SU 484 |

5DC

# FIG. 8

EP 4 779 894 A1

# FIG. 9

930   SIFS   942   SIFS   950

| Trigger frame | | Trigger-based PPDU STA n |
| | | 941   : |
| | | Trigger-based PPDU STA 1 |

BA

TXOP (925)

• • •

FIG. 10

# FIG. 11

EP 4 779 894 A1

# FIG. 12

EP 4 779 894 A1

# FIG. 13

MAC header

| Frame Control | Duration | RA | TA |
|---|---|---|---|

Octets: 2     2     6     6

| B0   B1 | B2   B3 | B4   B7 | B8 | B9 | B10 | B11 | B12 | B13 | B14 | B15 |
|---|---|---|---|---|---|---|---|---|---|---|
| Protocol Version | Type | Subtype | To DS | From DS | More Fragments | Retry | Power Management | More Data | Protected Frame | +HTC |

Bits: 2     2     4     1     1     1     1     1     1     1     1

# FIG. 14

# FIG. 15

# FIG. 16

One or more sequences

EHT beamformer — EHT NDP Announcement | SIFS | EHT sounding NDP | SIFS | BFRP Trigger | SIFS

EHT beamformee 1 — EHT Compressed Beamforming/CQI 1

EHT beamformee 2 — EHT Compressed Beamforming/CQI 2

⋮

EHT beamformee n — EHT Compressed Beamforming/CQI n

EP 4 779 894 A1

# FIG. 17

MAC header

| Frame Control | Duration | RA | TA | Sounding Dialog Token | STA Info 1 | • • • | STA Info n | FCS |
|---|---|---|---|---|---|---|---|---|

Octets:     2          2          6      6          1              4                        4          4

| B0 ... B10 | B11 ... B19 | B20 | B21 ... B24 | B25 ... B26 | B27 | B28 | B29 ... B31 |
|---|---|---|---|---|---|---|---|
| AID 11 | Partial BW Info | Reserved | Nc Index | Feedback Type And Ng | Disambiguation | Codebook Size | Reserved |

Bits:      11            9         1         4            2             1           1           3

| B0 | B1 ... B8 |
|---|---|
| Resolution | Feedback bitmap |

Bits:      1            8

EP 4 779 894 A1

# FIG. 18

EP 4 779 894 A1

Beamformer

| NPDA | | NDP |

V matrix optimization

Beamfromed PPDU

Beamformee

SIFS    SIFS

| Compressed beamforming/CQI /CQI |

# FIG. 19

# FIG. 20

$$D_i = \min_{\phi_i^1, \phi_i^2 \dots, \phi_i^{Nss}} \| V_i\, D\text{-}V_{i+1} \|^2 \text{ , where } D = \text{diag}\{e^{j\phi_i^1}, \dots, e^{j\phi_i^{Nss}}\}$$

# FIG. 21

2 by 2, TgnD, MCS 7

- FER (y-axis): $10^0$, $10^{-1}$, $10^{-2}$
- EbN0 (dB) (x-axis): 28 29 30 31 32 33 34 35 36 37 38

- - - - - - - - : w/smoothing, w/o optimization
————— : w/o smoothing, w/o optimization
————— : Pot optimization, threshold = 0.4799(98%-lie)
—·—·— : Full tone optimization

# FIG. 22

| 100 | 200 | 300 | 400 | 500 |
|-----|-----|-----|-----|-----|
| Legacy-Part | SIG-Part | STF-Part | LTF-Part | Data |

# FIG. 23

transmitting an NDPA — S100

transmitting an NDP — S200

receiving a Compressed beamforming/CQI frame — S300

performing V matrix optimization — S400

transmitting beamformed data PPDU — S500

# FIG. 24

receiving an NDPA — S600

receiving an NDP — S700

transmitting a Compressed beamforming/CQI frame — S800

# FIG. 25

```
┌──────────────┐                              ┌──────────────┐
│  Beamformer  │                              │  Beamformee  │
└──────────────┘                              └──────────────┘
        │                                             │
┌───────────────────────┐                             │
│ NDPA frame generation │──2500                        │
└───────────────────────┘                             │
        │          NDPA transmission                  │
        │────────────────────────────────────────────│──2510
        │          NDP transmission                   │
        │────────────────────────────────────────────│──2520
        │                                             │
        │                              ┌──────────────────────┐
        │                              │  Channel estimation  │──2530
        │                              └──────────────────────┘
        │                              ┌──────────────────────┐
        │                              │ Compressed Beamforming/│──2540
        │                              │  CQI frame generation │
        │                              └──────────────────────┘
        │    Compressed Beamforming/                  │
        │      CQI frame transmission                 │
        │────────────────────────────────────────────│──2550
┌───────────────────────┐                             │
│  V matrix optimization│──2560                        │
└───────────────────────┘                             │
        │          Data Transmission                  │
        │────────────────────────────────────────────│──2570
        │                              ┌──────────────────────┐
        │                              │ Conduct channel smoothing │──2580
        │                              └──────────────────────┘
        │                                             │
```

# FIG. 26

Obtaining control information related to Tone Plan (or RU) — S2610

↓

Configuring a PPDU based on the obtained control information — S2620

↓

Transmitting the PPDU — S2630

# FIG. 27

Receiving a PPDU — S2710

↓

Decoding the PPDU and obtaining control information related to Tone plane (or RU) — S2720

↓

Decoding a data field based on the RU — S2730

# FIG. 28

| transmitting, by a transmitting station (STA), a Null Data Packet Announcement (NDPA) frame to a receiving STA | S2810 |

↓

| transmitting, by the transmitting STA, an NDP frame to the receiving STA | S2820 |

↓

| receiving, by the transmitting STA, a feedback frame from the receiving STA | S2830 |

↓

| transmitting, by the transmitting STA, beamformed data to the receiving STA based on a V matrix optimized for smooth beamforming | S2840 |

# FIG. 29

| receiving, by a receiving station (STA), a Null Data Packet Announcement (NDPA) frame from a transmitting STA | S2910 |

↓

| receiving, by the receiving STA, an NDP frame from the transmitting STA | S2920 |

↓

| transmitting, by the receiving STA, a feedback frame to the transmitting STA | S2930 |

↓

| receiving, by the receiving STA, beamformed data from the transmitting STA based on a V matrix optimized for smooth beamforming | S2940 |

## INTERNATIONAL SEARCH REPORT

| International application No. |
|---|
| **PCT/KR2024/016140** |

| A. | CLASSIFICATION OF SUBJECT MATTER |
|---|---|

**H04B 7/06**(2006.01)i; **H04L 25/02**(2006.01)i; **H04W 84/12**(2009.01)i

According to International Patent Classification (IPC) or to both national classification and IPC

| B. | FIELDS SEARCHED |
|---|---|

Minimum documentation searched (classification system followed by classification symbols)

H04B 7/06(2006.01); H04L 25/02(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스무스 빔포밍(smooth beamforming), 최적화된 V 행렬(optimized V matrix), 대각 행렬(diagonal matrix), 불연속(discontinuity), 피드백 톤(feedback tone), 일부(part)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JUNG, Insik et al. LG ELECTRONICS. Smooth Beamforming with Feedback Overhead Reduction. IEEE 802.11-23/1143r2. 25 August 2023.<br>See slides 1-8. | 1-16 |
| Y | JEON, Eunsung et al. SAMSUNG. Channel Information Feedback for Smooth Beamforming - Follow Up. IEEE 802.11-23/1514r0. 07 September 2023.<br>See slides 1-7. | 1-16 |
| A | US 2017-0127385 A1 (QUALCOMM INC.) 04 May 2017 (2017-05-04)<br>See paragraphs [0142]-[0159]; and figures 26A-29. | 1-16 |
| A | US 2020-0153491 A1 (QUALCOMM INC.) 14 May 2020 (2020-05-14)<br>See paragraphs [0209]-[0214]; and figure 17. | 1-16 |
| A | US 2023-0188192 A1 (ATLAS GLOBAL TECHNOLOGIES LLC) 15 June 2023 (2023-06-15)<br>See paragraph [0212]; and figure 32A. | 1-16 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 January 2025** | **24 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/016140**

| Patent document cited in search report | | | Publication date (day/month/year) | Patent family member(s) | | | Publication date (day/month/year) |
|---|---|---|---|---|---|---|---|
| US | 2017-0127385 | A1 | 04 May 2017 | CN | 107925462 | A | 17 April 2018 |
| | | | | CN | 108352878 | A | 31 July 2018 |
| | | | | CN | 108352878 | B | 20 August 2021 |
| | | | | EP | 3338375 | A1 | 27 June 2018 |
| | | | | EP | 3371897 | A1 | 12 September 2018 |
| | | | | EP | 3371897 | B1 | 15 July 2020 |
| | | | | JP | 2018-538723 | A | 27 December 2018 |
| | | | | JP | 6625743 | B2 | 25 December 2019 |
| | | | | KR | 10-2018-0043266 | A | 27 April 2018 |
| | | | | KR | 10-2018-0080215 | A | 11 July 2018 |
| | | | | KR | 10-2078138 | B1 | 17 February 2020 |
| | | | | TW | 201713064 | A | 01 April 2017 |
| | | | | TW | 201720086 | A | 01 June 2017 |
| | | | | US | 10383092 | B2 | 13 August 2019 |
| | | | | US | 2017-0054542 | A1 | 23 February 2017 |
| | | | | WO | 2017-031451 | A1 | 23 February 2017 |
| | | | | WO | 2017-079381 | A1 | 11 May 2017 |
| US | 2020-0153491 | A1 | 14 May 2020 | US | 11929812 | B2 | 12 March 2024 |
| | | | | US | 2024-0297703 | A1 | 05 September 2024 |
| US | 2023-0188192 | A1 | 15 June 2023 | US | 10158413 | B2 | 18 December 2018 |
| | | | | US | 10992359 | B2 | 27 April 2021 |
| | | | | US | 2016-0330732 | A1 | 10 November 2016 |
| | | | | US | 2019-0140728 | A1 | 09 May 2019 |
| | | | | US | 2021-0211178 | A1 | 08 July 2021 |

Form PCT/ISA/210 (patent family annex) (July 2022)